# EUROPEAN PATENT APPLICATION

(11) **EP 1 972 864 A2**
(43) Date of publication of application: **24.09.2008**
(21) Application number: 08152553.7
(22) Date of filing: 10.03.2008
(51) Int. Cl.: F24H 1/44, F24H 8/00

(54) **Condensing boiler**

(30) Priority: 15.03.2007 IT VR20070042
(71) Applicant: I.C.I. CALDAIE S.p.A., 37059 Campagnola-Zevio VR (IT)
(72) Inventor: Pisani, Giovanni, 37135 Verona (IT)
(74) Representative: Modiano, Micaela Nadia

(57) **Abstract**

A condensing boiler comprising a base frame which supports an enclosure for containing the water to be heated, the enclosure being provided with a delivery connection and at least one return connection; the containment enclosure accommodates internally a substantially cylindrical combustion chamber which is arranged so that its axis is substantially horizontal; the combustion chamber is functionally connected to a burner and has an open end which is connected, by means of an exhaust gas redirection chamber, to a heat exchanger which is arranged below the combustion chamber and has a plurality of flues which are substantially parallel to each other and exit, with their output end, into an exhaust gas and condensation collection chamber, the flues being arranged, with their longitudinal extension, substantially horizontally, and the combustion chamber having a longitudinal extension longer than the longitudinal arrangement of the flues.

## Description

The present invention relates to a condensing boiler.

Condensing boilers with high rated capacity are known which are generally constituted by an outer enclosure which delimits a compartment which contains the water to be heated and accommodates internally a through-flame furnace, which has a cylindrical shape with a substantially horizontal axis, and a plurality of substantially vertical flues, which enter the lower portion of the side wall of the furnace and lead into an exhaust gas and condensation collection chamber arranged below the flues.

The condensing boilers described above suffer some disadvantageous aspects, among which the high manufacturing cost, caused mainly by their structural complexity, which in turn makes the automation of some steps of the production process extremely complicated.

In particular, the saddle weld which allows to join the vertical flues to the furnace is difficult to perform and therefore requires the use of highly qualified and expert welders or the use of extremely expensive anthropomorphic robots.

Moreover, the space occupation of this type of boilers is considerable, if compared to the delivered output, and is often incompatible with the spaces currently available in boiler rooms of buildings.

The aim of the present invention is to provide a valid solution to the drawbacks mentioned above by providing a condensing boiler which has a high power capacity and is constructively simple to provide.

Within this aim, an object of the invention is to provide a condensing boiler which can yield a high rated capacity though being much less bulky in terms of dimensions than traditional boilers.

Another object of the present invention is to provide a condensing boiler which can be obtained by means of commonly commercially available elements and materials so as to be competitive also from a merely economical standpoint.

This aim and these and other objects, which will become better apparent hereinafter, are achieved by a condensing boiler according to the invention as defined in appended claim 1.

Further characteristics and advantages of the invention will become better apparent from the description of some preferred but not exclusive embodiments of the boiler according to the invention, illustrated by way of non-limiting example in the accompanying drawings, wherein:

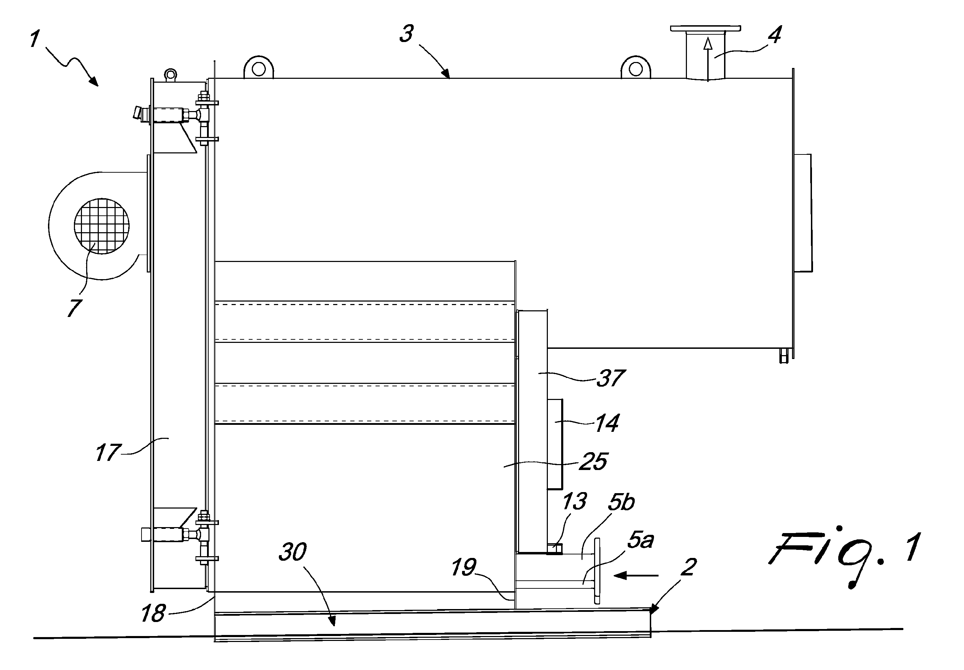

Figure 1 is a side elevation view of the boiler according to the invention;

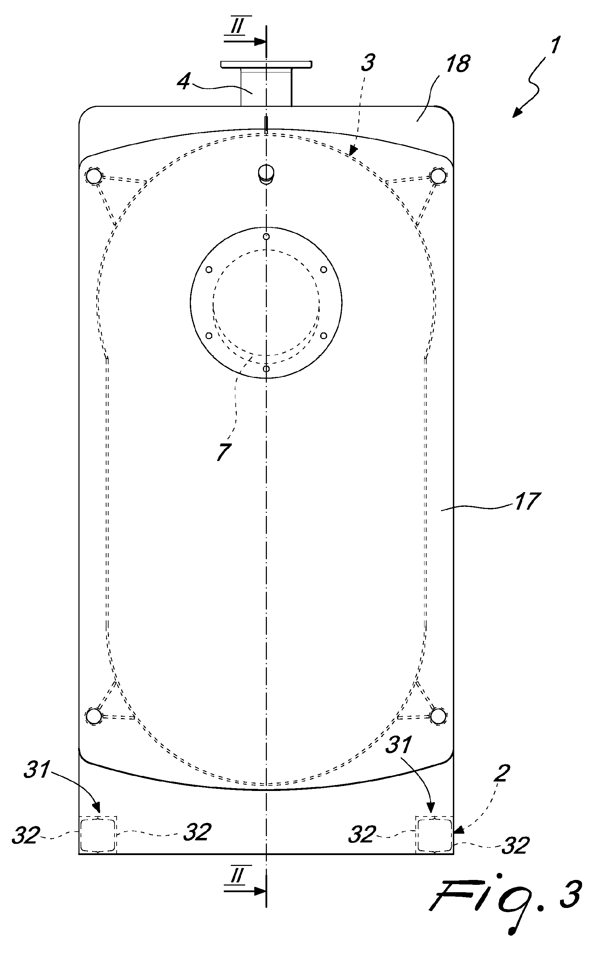

Figure 2 is a longitudinal sectional view of the boiler according to the invention, taken along the line II-II of Figure 3;
Figure 3 is a front elevation view of the boiler according to the invention;
Figure 4 is a front elevation view of the boiler according to the invention on the opposite side with respect to Figure 3, with parts shown in phantom lines and others shown in cutout view, for the sake of greater clarity;
Figure 5 is a view, similar to Figure 3, in which some parts have been omitted in order to show the interior of the boiler according to the invention;

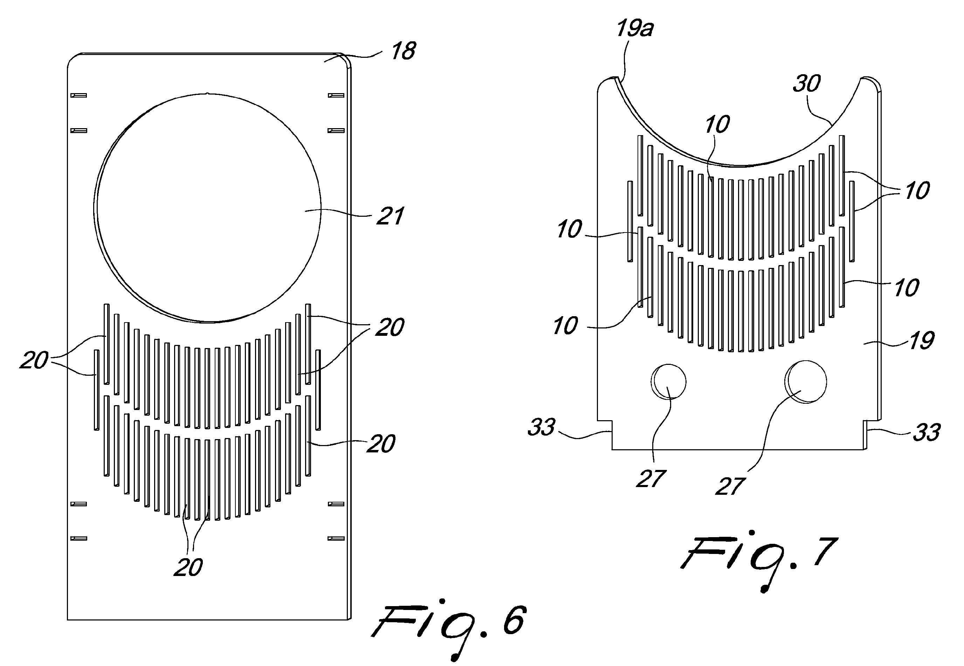

Figure 6 is a front elevation view of a first upright plate;
Figure 7 is a front elevation view of a second upright plate;
Figure 8 is a perspective view of another embodiment of the base frame of the boiler according to the invention;
Figure 9 is a perspective view of the base frame according to the embodiment of Figure 8, surmounted by a first upright plate and a second upright plate, during a step of the manufacture of the boiler according to the invention.

With reference to the figures, the condensing boiler according to the invention, generally designated by the reference numeral 1, comprises a base frame 2, which supports an enclosure 3 which delimits a space for containing the water to be heated.

In particular, the enclosure 3 is provided with a delivery connection 4 for the outflow from the boiler of the heated water to be sent to users, and with at least one return connection, for the inflow into the boiler of the water to be heated, which arrives from the users. Preferably, as in the illustrated example, there are at least two return connections, of which one, designated by the reference numeral 5a in the figures, is for the inflow into the boiler of return water at a low temperature, typically from 5 to 55°C, and another one, designated by the reference numeral 5b in the figures, is for the inflow of return water at a medium temperature, for example from 40 to 70°C.

A substantially cylindrical combustion chamber 6 is accommodated inside the enclosure 3 and is arranged so that its axis is substantially horizontal.

In particular, the combustion chamber 6 is functionally connected to a burner 7 and has an open end 8, which is connected, by means of an exhaust gas redirection chamber 9, to a heat exchanger 10 which is arranged below the combustion chamber 6.

At its other end, the combustion chamber 6 is generally closed by a backplate 6a and is provided conveniently, on its cylindrical side wall, in a per se known manner, with circumferential corrugations 6b which are designed to increase its surface for heat exchange with the water to be heated.

The heat exchanger 10 is constituted by a plurality of flues 11, which are substantially parallel to each other and exit, with their outlet end, into an exhaust gas and condensation collection chamber 12, which is conveniently provided, on its bottom, with a condensation drain 13 and is further provided with an outlet port 14 which can be connected to a stack for evacuating the exhaust gases into the outside environment.

According to the invention, the flues 11 are arranged so that their longitudinal extension is substantially horizontal, and also according to the invention, the combustion chamber 6 has a longitudinal extension longer than the longitudinal extension of the flues 11.

With this configuration, in practice, the boiler according to the invention is capable of generating an extremely high thermal power, even higher than 1200 kW, although its overall space occupation is reduced significantly with respect to similar boilers of the background art.

Advantageously, the combustion chamber 6 can be from 1.1 to 2.5 times longer than the longitudinal arrangement of the flues 11, so as to be able to provide the boiler according to the invention with different power ratings.

As shown, the combustion chamber 6 is conveniently arranged so as to protrude with one of its portions from the connection region 16 between the flues 11 and the exhaust gas and condensation collection chamber 12 in the opposite direction with respect to the heat exchanger 10.

Preferably, the exhaust gas redirection chamber 9 is delimited on one side by a closure door 17, which faces, in the closed condition, the open end 8 of the combustion chamber and the inlets of the flues 11 and is pivoted to the enclosure 3 of the boiler, so as to allow easy access to the combustion chamber 6 and to the flues 11 for their inspection and maintenance.

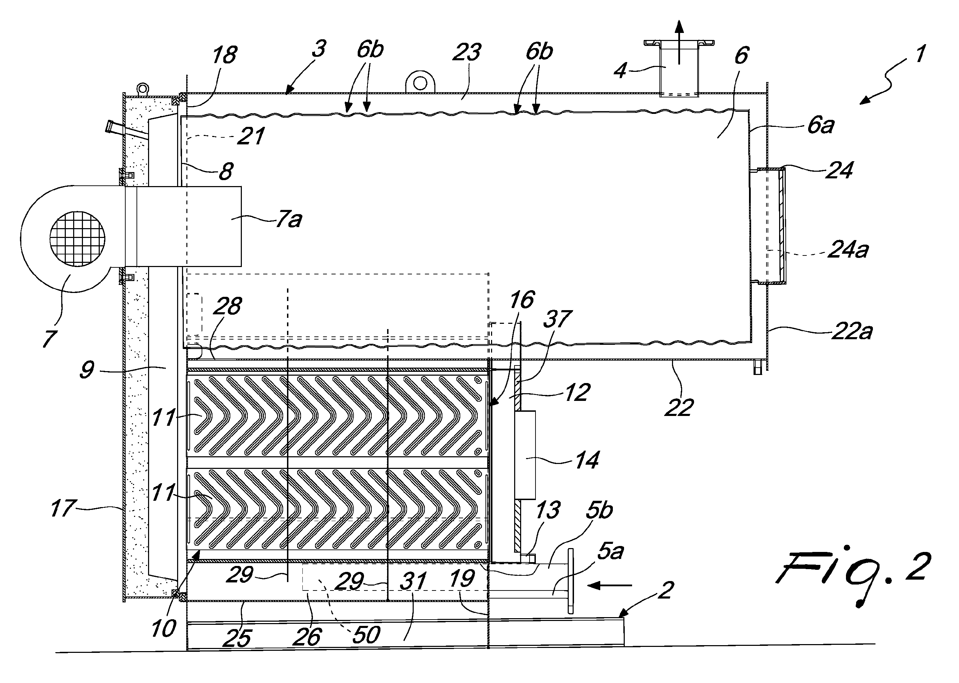

In one possible embodiment, the burner 7 is arranged with its flow nozzle 7a substantially at the open end 8 of the combustion chamber 6, as shown in Figure 2.

In this case, the burner 7 is conveniently coupled to the closure door 17 and is constituted preferably by a forced draft burner, which allows to generate an elongated flame which therefore is capable of striking in an optimum manner the combustion chamber 6.

In an alternative embodiment, not shown, it is also possible to arrange the burner 7, with its flow nozzle 7a, substantially at the end of the combustion chamber 6 that lies opposite with respect to its open end 8, and in this case it is preferable to use a burner of the premixing type, which is inserted for example with the flow nozzle in an appropriately provided through seat formed within the backplate 6a of the combustion chamber 6.

As can be seen clearly in Figure 2, in order to obtain optimum heat exchange between the hot exhaust gases and the water to be heated, forming condensation in the exhaust gases, each water return connection and more preferably at least the return connection 5a for the water at low temperature is advantageously located so as to lead out proximate to the end where the flues 11 exit, while the delivery connection 4 is positioned in the upper portion of the enclosure 3 proximate to the end of the combustion chamber 6 that lies opposite its open end 8.

Conveniently, in order to avoid remixing of the return water at different temperatures which might limit the formation of condensation within the flues 11, the return connection 5b for medium-temperature water is connected to a conveyor tube 50 which lies within the enclosure 3 and leads out substantially in a region which is proximate to the intermediate portion of the flues 11 or, optionally, in a region which is proximate to their inlet end.

In a preferred embodiment, a first upright plate 18 and a second upright plate 19, which face each other and are mutually spaced, protrude upwardly and substantially vertically from the base frame 2.

The first upright plate 18 is higher than the second upright plate 19. The flues 11 lie between the first and second upright plates 18 and 19 and are fixed, at the opposite ends, within corresponding engagement seats 20 formed within the first and second upright plates 18 and 19.

In the upper portion of the first upright plate 18 there is conveniently an opening 21 in which the combustion chamber 6 engages with its open end 8.

Advantageously, the enclosure 3 is obtained by means of a tubular body 22, which is arranged substantially coaxially to the combustion chamber 6, so as to delimit, with the outer side wall of the combustion chamber 6, an annular interspace 23 for containing the water to be heated.

As shown, at one of its ends the tubular body 22 is connected, for example by butt welding, to the first upright plate 18 and is closed, at its opposite end, by a back panel 22a, in which an opening 24a is provided advantageously for the passage of a cylindrical body 24 for supporting the combustion chamber 6.

Conveniently, at an intermediate portion thereof, the tubular body 22 is connected in a downward region to the upper edge 19a of the second upright plate 19, for example by welding, in order to allow a valid support thereof.

It should be noted that the second upright plate 19 is advantageously contoured, on its upper edge 19a, complementarily with respect to the tubular body 22, so as to define an engagement recess 30 for the tubular body 22.

Due to this solution, a considerable reduction in the height of the boiler according to the invention is achieved, to the full benefit of the containment of its overall dimensions.

Conveniently, the enclosure 3 is further formed by a lower wall 25, which is designed to partially wrap around the heat exchanger 10 and is preferably provided by means of a metal plate which is folded into a cradle-shaped configuration.

More particularly, the lower wall 25 lies between the first upright plate 18 and the second upright plate 19 and is connected in an upward region, for example by welding, to the tubular body 22, so as to define a lower compartment 26 for containing the water to be heated which has a direct heat exchange with the heat exchanger 10.

It should be noted that in the second upright plate 19 there is conveniently at least one through port 27 which allows to connect a respective return connection 5a, 5b to the lower compartment 26, while in the tubular body 22 there are one or more passages 28 for the water to be heated, which are arranged advantageously proximate to the open end 8 of the combustion chamber 6 and are designed to connect the lower compartment 26 to the interspace 23.

In order to facilitate the exchange of heat between the water and the exhaust gases that flow within the flues 11, conveniently inside the lower compartment 26 there are one or more baffles 29 which are adapted to generate, between the return connections 5a, 5b and the passages 28, a convoluted path for the water to be heated with portions arranged substantially at right angles to the longitudinal extension of the flues 11.

Advantageously, the base frame 2 of the boiler is provided by means of a pair of longitudinal members 31, which are substantially parallel and spaced one another; each one engages respective lower regions of the first upright plate 18 and of the second upright plate 19.

Conveniently, the longitudinal members 31 protrude from the second upright plate 19 toward the end of the combustion chamber that lies opposite its open end 8, so that the weight of the entire boiler 1, which acts on its center of gravity can fall, with its line of action, between the two longitudinal members 31, so as to ensure perfect stability of said boiler.

As shown, each one of the longitudinal members 31 is preferably provided by a pair of mutually opposite profiles 32 with an open C-shaped cross-section or a closed tubular cross-section, which are conveniently butt-welded, at one of their ends, to the first upright plate 18 and pass through a corresponding angular cutout 33 provided in a downward region in the second upright plate 19.

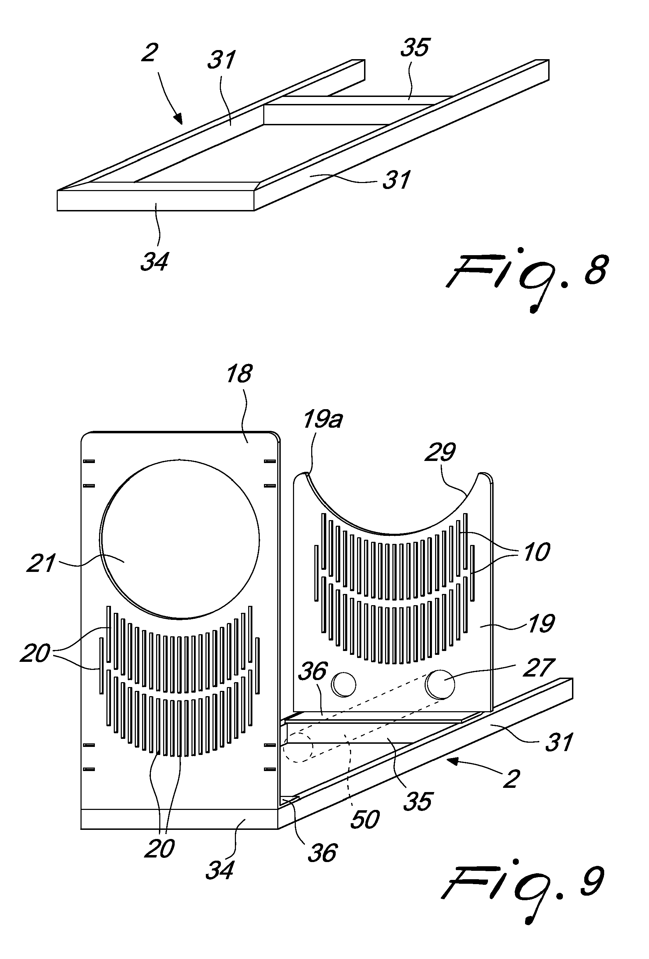

According to another embodiment shown in Figures 8 and 9, the base frame 2 can further comprise also a first cross-member 34 and a second cross-member 35, which join together the longitudinal members 31 and on which the first upright plate 18 and the second upright plate 19 are fixed respectively, for example by welding or bolting a lower folded edge thereof 36.

In order to facilitate correct draining of the condensation that forms in the exhaust gases during the process for heat exchange with the water to be heated, advantageously the combustion chamber 6 is inclined so as to descend toward the exhaust gas redirection chamber 9, with an angle ranging substantially from 0 to 10° with respect to horizontal, and the flues 11 are inclined so as to descend toward the exhaust gas and condensation collection chamber 12, with an angle ranging substantially from 0 to 10° with respect to the horizontal.

Preferably, the flues 11 have a flattened transverse cross-section, so as to assume a substantially pouch-like configuration and in particular are provided conveniently by means of a respective pair of undulated plates, which are arranged so as to face each other and are mutually sealed along their longitudinal edges.

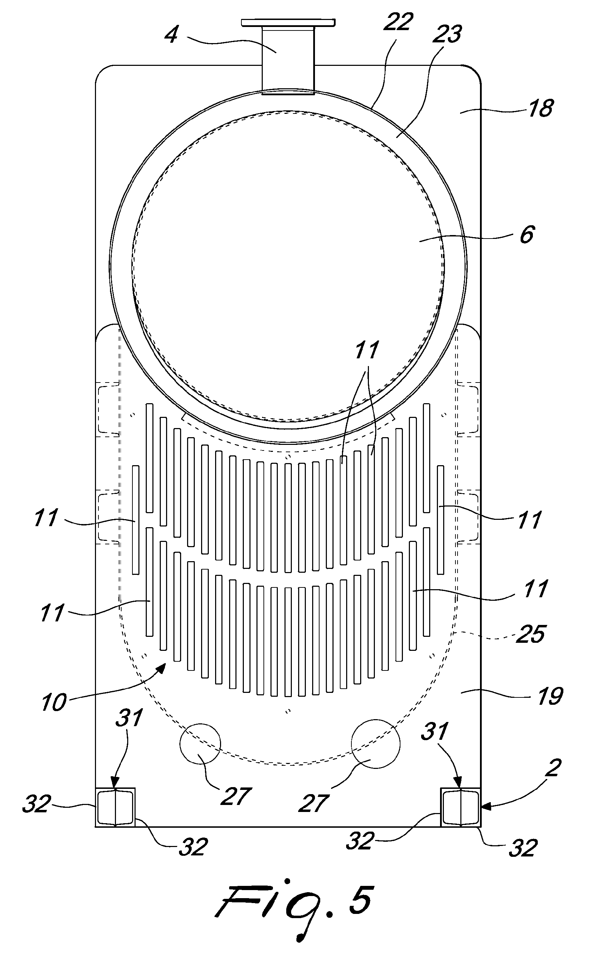

It should be noted that the flues 11 thus shaped are preferably arranged so that their larger transverse extension is substantially vertical and are arranged mutually side-by-side along one or more mutually superimposed rows, which lie in a circular arc which is centered substantially on the axis of the combustion chamber 6, as can be seen in particular in Figure 5.

Advantageously, the exhaust gas and condensation collection chamber 12 is delimited at least partially by a bottom lid 37 which conveniently can be connected detachably, for example by means of screw elements 38 or the like, to the second upright plate 19.

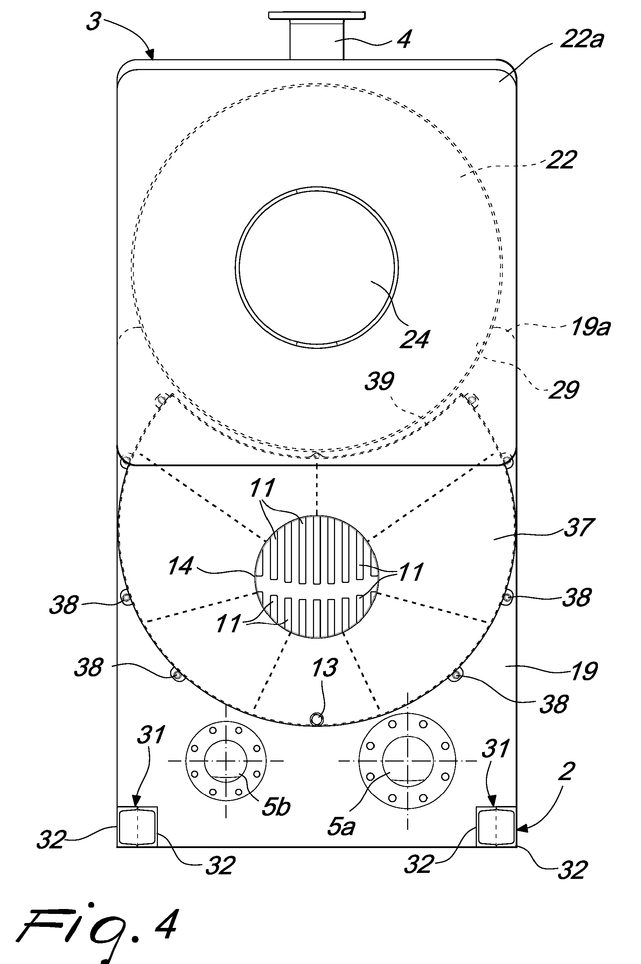

As shown in particular by Figure 4, the bottom lid 37 advantageously has, at its upper peripheral portion, a recessed region 39, which is shaped complementarily with respect to the tubular body 22 in order to allow the passage of the tubular body 22, thus achieving a considerable containment of the vertical space occupation of the boiler according to the invention.

From what has been described above it is evident that the condensing boiler according to the invention is capable of generating very high power levels though being very compact in size.

In practice it has been found that the invention achieves, in all of its embodiments, the intended aim and objects.

In particular, it is stressed that the boiler according to the invention is extremely simple and inexpensive to provide.

Another advantage of the boiler according to the invention consists in that it can use both forced draft burners and premixing burners, with the consequent possibility to achieve a reduction in polluting emissions in general and in the amount of NOₓ in particular, as well as a reduction in the noise emitted by the boiler and a wide range of flame modulation, for example from 10 to 100%.

All the characteristics of the invention indicated above as advantageous, convenient or the like may also be omitted or be replaced with equivalents.

The individual characteristics described with reference to general teachings or particular embodiments may all be present in other embodiments or may replace characteristics in these embodiments.

The invention thus conceived is susceptible of numerous modifications and variations, all of which are within the scope of the appended claims.

In practice, the materials used, so long as they are compatible with the specific use, as well as the dimensions and shapes, may be any according to requirements.

All the details may further be replaced with other technically equivalent elements.

The disclosures in Italian Patent Application No. VR2007A000042 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A condensing boiler, comprising a base frame which supports an enclosure for containing the water to be heated provided with a delivery connection and at least one return connection and accommodating internally a substantially cylindrical combustion chamber which is arranged so that its axis is substantially horizontal, said combustion chamber being functionally connected to a burner and having an open end which is connected, by means of an exhaust gas redirection chamber, to a heat exchanger which is arranged below said combustion chamber and has a plurality of flues which are substantially mutually parallel and exit, with their output end, into an exhaust gas and condensation collection chamber, **characterized in that** said flues are arranged, with their longitudinal extension, substantially horizontally, and **in that** said combustion chamber has a longitudinal extension longer than the longitudinal arrangement of said flues.

2. The boiler according to claim 1, **characterized in that** said combustion chamber has a longitudinal extension which is from 1.1 to 2.5 times longer than the length of the longitudinal extension of said flues.

3. The boiler according to one or more of the preceding claims, **characterized in that** said combustion chamber extends, with one of its portions, from the region for connection between said flues and said exhaust gas and condensation collection chamber in the opposite direction with respect to said heat exchanger.

4. The boiler according to one or more of the preceding claims, **characterized in that** said burner is accommodated, with its flow nozzle, in said combustion chamber substantially at said open end of said combustion chamber.

5. The boiler according to claim 4, **characterized in that** said burner is constituted by a forced draft burner.

6. The boiler according to one or more of the preceding claims, **characterized in that** said burner is accommodated, with its flow nozzle, in said combustion chamber substantially at the end of said combustion chamber that lies opposite said open end.

7. The boiler according to claim 6, **characterized in that** said burner is constituted by a burner of the premixing type.

8. The boiler according to one or more of the preceding claims, **characterized in that** said at least one return connection is located proximate to the output end of said flues and said delivery connection is located in the upper portion of said enclosure, proximate to the end of said combustion chamber that lies opposite said open end.

9. The boiler according to one or more of the preceding claims, **characterized in that** a first upright plate and a second upright plate rise in an upward region and substantially vertically from said base frame, face each other and are spaced one another, said first upright plate being higher than said second upright plate, said flues being fixed, at their opposite ends, in corresponding engagement seats formed in said first and second upright plates, said combustion chamber being engaged, with its open end, in a corresponding opening formed in an upward region in said first upright plate.

10. The boiler according to one or more of the preceding claims, **characterized in that** said enclosure comprises a tubular body which is arranged substantially coaxially to said combustion chamber in order to delimit, with the cylindrical side wall of said combustion chamber, an annular interspace for containing the water to be heated, and a lower wall, which wraps partially around said heat exchanger and is connected to said tubular body, in order to form a lower compartment for containing the water to be heated in a heat-exchange relation with said heat exchanger, at least one passage for the water to be heated being formed in said tubular body, being located proximate to said open end of said combustion chamber and connecting said lower compartment to said annular interspace.

11. The boiler according to one or more of the preceding claims, **characterized in that** it comprises, within said lower compartment, baffles adapted to generate, between said return connection and said at least one passage, a convoluted path for the water to be heated, with portions arranged substantially at right angles to the longitudinal extension of said flues.

12. The boiler according to one or more of the preceding claims, **characterized in that** said tubular body is connected in a downward region, at an intermediate portion, to the upper edge of said second upright plate.

13. The boiler according to one or more of the preceding claims, **characterized in that** said second upright plate is contoured, at its upper edge, complementarily to said tubular body in order to form an accommodation recess for said tubular body.

14. The boiler according to one or more of the preceding claims, **characterized in that** said base frame comprises a pair of longitudinal members which are substantially parallel and spaced one 0another and engage respective lower regions of said first upright plate and of said second upright plate, said longitudinal members protruding from said second upright plate toward the end of said combustion chamber that lies opposite said open end.

15. The boiler according to one or more of the preceding claims, **characterized in that** said longitudinal members are mutually joined by a first cross-member, which is connected in an upward region to said first upright plate, and by a second cross-member, which is connected in an upward region to said second upright plate.

16. The boiler according to one or more of the preceding claims, **characterized in that** said combustion chamber is inclined downwardly toward said exhaust gas redirection chamber with respect to the horizontal by an angle ranging substantially from 0 to 10°, said flues being inclined, with respect to the horizontal, downwardly toward said exhaust gas and condensation collection chamber, by an angle ranging substantially from 0 to 10°.

17. The boiler according to one or more of the preceding claims, **characterized in that** said flues have a flattened transverse cross-section.

18. The boiler according to one or more of the preceding claims, **characterized in that** said flues are arranged, with their larger transverse extension, substantially vertically and side by side along one or more rows, which are mutually superimposed and lie in a circular arc which is centered substantially on the axis of said combustion chamber.

19. The boiler according to one or more of the preceding claims, **characterized in that** said exhaust gas and condensation collection chamber is formed at least partially by a bottom lid which has, at its upper peripheral portion, a recessed region which is shaped complementarily to said tubular body and is crossed by said tubular body.
